# FASCICULE DE BREVET EUROPEEN

(11) **EP 2 732 183 B1**
(45) Date de publication et mention de la délivrance du brevet: **11.09.2019**
(21) Numéro de dépôt: 12733677.4
(22) Date de dépôt: 04.07.2012
(51) Int. Cl.: F16F 9/49, F16F 9/516, F16F 9/06

(54) **PROCÉDÉ DE SUSPENSION ET DISPOSITIF AMORTISSEUR DESTINÉ À UN VÉHICULE AUTOMOBILE**
AUFHÄNGUNGSVERFAHREN UND STOSSDÄMPFERVORRICHTUNG FÜR EIN KRAFTFAHRZEUG
SUSPENSION METHOD AND SHOCK-ABSORBING DEVICE FOR AN AUTOMOBILE

(30) Priorité: 11.07.2011 FR 1156289
(43) Date de publication de la demande: 21.05.2014
(73) Titulaire: Bianchi, Mauro, 13100 Aix en Provence (FR)
(72) Inventeur: BIANCHI, Mauro, F-13100 Aix en Provence (FR)
(74) Mandataire: Decobert, Jean-Pascal
(86) Numéro de dépôt international: PCT/EP2012/063030
(87) Numéro de publication internationale: WO 2013/007572

(56) Documents cités:
- WO-A1-02/095260
- FR-A1- 2 773 599
- JP-U- 62 170 846
- US-A1- 2001 025 753
- US-A1- 2002 130 453

## Description

La présente invention concerne un procédé de suspension ainsi qu'un dispositif amortisseur avec un ensemble amortisseur destiné à tout type de véhicule automobile, notamment quadricycle, véhicule de compétition ou de sport, motocycle, véhicule tout terrain, poids lourd et/ou remorque.

Le déposant de la présente demande de brevet a déjà déposé plusieurs demandes de brevet basées sur le concept dit Contractée® concernant un ensemble amortisseur doté de deux raideurs distinctes qui s'articulent autour de la position statique du véhicule avec une phase de compression et une phase de détente. Ceci est notamment décrit dans le document WO-A-91/04876 qui montre un ensemble amortisseur dont la raideur en course de détente peut être nettement supérieure à celle dudit ensemble en course de compression avec un rapport de l'ordre de 1 à 3.

Le document FR-A-2 664 210 divulgue une amélioration pour un tel ensemble amortisseur en proposant une flexibilité de raccordement insérée entre la zone de raideur linéaire de la phase de détente et celle de la phase de compression de sorte à éviter un passage trop abrupt entre les deux. Il a été constaté que si l'adoption de la flexibilité de raccordement améliore nettement le confort d'un véhicule équipé de tels ensembles amortisseurs, l'inconfort croît d'une façon importante dès lors que la sollicitation de l'ensemble amortisseur présente sa course en détente dépassant la zone de raccordement.

Un tel ensemble amortisseur selon le concept Contractive® a démontré sa pertinence tant dans le domaine de la compétition que celui des voitures de production. Cependant un tel ensemble amortisseur présente certains inconvénients.

Un premier inconvénient est qu'un tel ensemble présente un encombrement pouvant requérir son allongement afin d'y loger l'ensemble antagoniste garantissant deux raideurs distinctes pour des phases de compression et de détente.

Un second inconvénient est la nécessité d'insérer un élément en élastomère à l'intérieur de l'ensemble amortisseur, ce qui présente des problèmes de fiabilité importants, l'élément élastomère ayant des difficultés à garder ses qualités mécaniques en fonctionnant dans un environnement très chaud et dans le fluide hydraulique présent à l'intérieur de l'ensemble, fluide qui peut être corrosif.

Un troisième inconvénient est qu'un ensemble amortisseur avec deux raideurs distinctes sur des véhicules de production qui sont soumis à des charges très variables est confronté à un problème de dégradation de la tenue d'assiette selon la charge du véhicule. Cependant, ce problème existe aussi, en partie, pour les ensembles amortisseurs conventionnels.

Enfin et surtout, un quatrième inconvénient est que l'utilisation de deux phases avec des raideurs très dissemblables requiert un tarage d'amortissement spécifique à chacune des phases, ce qui, jusqu'alors, ne peut être obtenu par un ensemble amortisseur du type utilisé pour la Contractive®. Ainsi, si le confort offert par les véhicules dotés d'ensembles amortisseurs du type Contractive® peut être jugé satisfaisant, voir excellent sur les saillies de la chaussée provoquant la compression d'au moins un ensemble amortisseur présent, lorsque cet ensemble amortisseur se trouve être sollicité dans le sens de la détente et au-delà de la zone de raccordement, le confort se trouve très nettement dégradé.

Ainsi, pour un ensemble amortisseur du type Contractive® les valeurs de l'amortissement en phase de détente et en phase de compression résultent d'un compromis devant satisfaire simultanément deux niveaux de raideur très dissemblables, d'où une relation entre raideur et amortissement imparfaite.

Le fait de prévoir une troisième raideur dénommée raideur de raccordement et destinée à lisser d'une façon très progressive le passage d'une raideur faible à une raideur très forte a contribué à rendre acceptable le comportement et le confort, mais cette technique atteint rapidement ses limites dès lors que les saillies de la route sollicitent davantage la suspension dans le secteur de la course de l'ensemble amortisseur situé entre la position statique et la fin de la course de détente.

Le but recherché dans la présente invention est de réduire tout ou partie des inconvénients précités.

Un aspect de l'invention est relatif à un dispositif amortisseur selon la revendication 1. Il comprend un ensemble amortisseur présentant en son intérieur un piston relié à une tige, le piston et sa tige associée étant mobiles aussi bien en compression qu'en détente autour d'une position statique à l'intérieur de l'ensemble amortisseur afin d'effectuer une action d'amortissement, l'intérieur de l'ensemble amortisseur étant rempli d'un fluide hydraulique, caractérisé en ce que ledit ensemble coopère avec des moyens de variation de l'amortissement de sorte à produire : une phase de compression se composant respectivement d'une sous-phase de compression dirigée de la position statique vers la position maximale de compression du piston et d'une sous-phase de détente dirigée de ladite position maximale vers la position statique, et une phase de détente se composant respectivement d'une sous-phase de détente dirigée de la position statique vers la position maximale de détente du piston et d'une sous-phase de compression dirigée de ladite position maximale vers la position statique, les moyens de variation de l'amortissement agissant sur l'ensemble amortisseur afin que la valeur d'amortissement d'au moins l'une parmi la sous-phase de compression de la phase de compression et la sous phase de détente de la phase de détente soit différente de la valeur d'amortissement de, respectivement, la sous-phase de détente de la phase de compression et la sous-phase de compression de la phase de détente.

Alors que les techniques actuelles ne cherchent qu'à ajuster la raideur et l'amortissement le long de la course du piston, l'invention exploite un réglage selon le sens de déplacement du piston. Ainsi, s'il se déplace vers le bas, l'amortissement pourra être différent d'une mobilité vers le haut, même pour un même secteur de sa course.

Il est prévu préférentiellement selon l'invention un ensemble amortisseur présentant en son intérieur un piston relié à une tige, le piston et sa tige associée étant mobiles aussi bien en compression qu'en détente autour d'une position statique à l'intérieur de l'ensemble amortisseur afin d'effectuer une action d'amortissement, l'intérieur de l'ensemble amortisseur étant rempli d'un fluide hydraulique, caractérisé en ce que ledit ensemble coopère avec un module de détente, ce module de détente agissant sur l'ensemble amortisseur afin de modifier tant la valeur de la raideur que celle de l'amortissement pour le secteur de course de la suspension allant de la position statique à la position toute détendue correspondant à la phase de détente de la suspension.

La démarche inventive liée à la présente invention a été de reconsidérer complètement l'amortissement d'un ensemble amortisseur, non pas, comme l'état de la technique le plus proche, en prenant en compte deux phases comme un tout, c'est à dire les phases complètes de la compression et de la détente, mais de considérer des sous-phases dans ces phases.

Les suspensions traditionnelles, du fait de leur architecture, sont dotées d'un effet amortissement dans le sens de la compression, c'est-à-dire, entre la position toute détendue jusqu'à la position toute comprimée de la course de la suspension et dans le sens de la détente, c'est-à-dire, entre la position toute comprimée jusqu'à la position toute détendue.

Il y a des frictions positives crées dans les amortisseurs. Il y a par contre des frictions parasites et il est notoire que tous les ingénieurs développant des suspensions ont le souci de réduire au maximum ces frictions solides afin de ne pas polluer le fonctionnement dynamique et le confort de la suspension. Or, il s'est révélé que le fait d'être conduit à choisir une valeur unique d'amortissement pour la totalité de la course de la suspension pénalise le fonctionnement.

Lors du fonctionnement d'une suspension à partir du point de départ d'une suspension au repos ou en position statique, lorsque la suspension est soumise à une charge, elle va se comprimer et lorsqu'en fin de cette phase de compression, ce complément de charge va s'estomper. Le rôle de l'amortisseur sera alors de freiner le retour vers la position statique de la suspension ; ce qui nécessite un effet amortissement dans le sens de la détente. Inversement, toujours en considérant comme point de départ une suspension au repos ou en position statique, lorsque la suspension est soumise à une diminution de sa charge, elle va se décomprimer et, à la fin de cette phase de décompression, lorsque cette diminution de charge va s'estomper, le rôle de l'amortisseur sera de freiner le retour vers la position statique de la suspension ; ce qui nécessite un effet amortissement dans le sens de la compression.

Ainsi, lorsque sous l'effet d'une variation de la charge, la suspension se comprimant, elle aura à vaincre la résistance du ressort de la suspension mais aussi à vaincre le freinage ou friction dû à l'amortissement, ce qui nuit à la dynamique de la suspension et surtout à son confort. Cette situation est exactement identique dans le cas contraire, lorsque la variation de la charge va provoquer la décompression du ressort de sustentation du véhicule. Ici aussi, la suspension doit vaincre à la fois la masse du véhicule mais aussi vaincre le freinage ou la friction due à l'amortissement. L'amortissement en phase de compression a alors la tâche de freiner le retour vers la position statique avec une valeur forcement limitée, ce qui nuit à la dynamique de la suspension et surtout à son confort.

En résumé, pour un amortissement traditionnel dans le sens de la compression, en partant de la position toute détendue de la suspension et jusqu'à la position de repos ou statique, un freinage ou un amortissement énergique sera nécessaire alors que, poursuivant sa course entre la position de repos ou statique jusqu'à la position toute comprimée, l'effet amortissement devrait être réduit, voire supprimé, au bénéfice d'un meilleur confort et d'une meilleure dynamique de fonctionnement.

L'invention propose de faire varier l'amortissement suivant le gradient de mise en compression, s'il est positif, une première valeur d'amortissement sera appliquée ; s'il est négatif, une deuxième valeur sera employée. Il en est de même en détente.

Les mêmes observations sont transposables dans le sens de la détente. Ceci explique pourquoi un amortissement unique, dans le sens de la compression comme dans le sens de la détente, ne peut être considéré que comme un compromis bien loin d'être optimisé.

La stratégie d'amortissement selon la présente invention prévoit de scinder la phase de compression en deux sous-phases de compression et/ou de scinder la phase de détente en deux sous-phases de détente de valeurs distinctes, d'où l'appellation EVO - 4 AVS (quatre Amortissements de Valeurs Séparées). Il est alors prévu quatre valeurs d'amortissement distinctes pour les quatre phases de travail au lieu de deux valeurs d'amortissement pour ces mêmes quatre phases de travail

Ainsi, la solution selon l'état de la technique appelée solution Contractive, malgré d'indéniables qualités concernant le fonctionnement dynamique, un bilan économique excellent et un confort jugé globalement comparable à la solution traditionnelle, ce confort étant jugé tantôt un peu meilleur, tantôt un peu moins bon selon les caractéristiques du terrain, n'est pas arrivée à s'imposer dans le domaine de la grande production, se trouvant encore plus pénalisée par l'amortissement traditionnel qu'une suspension utilisant des raideurs linéaires traditionnelles et des barres anti-devers.

En effet, jusqu'alors, il n'était pas prévu d'ajuster l'amortissement en fonction de raideurs réelles aussi dissemblables pendant les différentes sous-phases et l'amortissement jusqu'ici prévu ne pouvait être qu'un compromis d'une même valeur pour ces sous-phases allant dans le même sens, vers la compression ou vers la détente.

Les avantages offerts par l'invention en termes de stratégie d'amortissement, pourront être exploités avec une suspension traditionnelle ou pseudo traditionnelle qui utiliserait un Δ des raideurs symboliques tout en bénéficiant des avantages offerts par un amortissement optimisé.

Il est avantageux de prévoir une solution technique sans délocalisation de l'ensemble module de détente car une solution de ce type peut avoir un intérêt dans certains cas.

Conformément à la présente invention, avec un module de détente pour l'ensemble amortisseur, il est possible de prévoir une valeur d'amortissement plus forte ou plus faible selon la sous-phase concernée. Il est donc possible d'adopter pour chacune des sous-phases, aussi bien lors d'une phase de compression ou de détente, un amortissement optimisé dans le sens de la détente comme dans le sens de la compression.

Le dispositif amortisseur exemplaire pourra en outre présenter au moins facultativement l'une quelconque des caractéristiques suivantes :
Avantageusement, une phase de compression se composant respectivement d'une sous-phase de compression de la position statique à la position maximale de compression du piston et d'une sous-phase de détente de ladite position maximale à la position statique et une phase de détente se composant respectivement d'une sous-phase de détente de la position statique à la position maximale de détente du piston et d'une sous-phase de détente de ladite position maximale vers la position statique, le module de détente agit sur l'ensemble amortisseur afin de modifier la valeur d'amortissement, outre son action sur la raideur de la suspension, pendant une ou plusieurs sous-phases.

Dans un exemple ne faisant pas partie de l'invention telle que revendiquée, l'ensemble amortisseur comporte un piston flottant disposé sur la tige de l'amortisseur entre le piston et l'extrémité de l'ensemble par laquelle sort ladite tige, cette extrémité étant dite fermeture supérieure, ledit piston flottant étant mobile le long de ladite tige et délimitant avec la ladite fermeture une chambre interne dans l'ensemble amortisseur, la position du piston flottant influant sur la pression du fluide hydraulique dans ladite chambre interne en changeant en conséquence la valeur de la raideur et de l'amortissement de l'ensemble amortisseur.

Avantageusement, le module de détente se trouve à l'extérieur dudit ensemble, ledit module de détente étant en communication fluidique avec ladite chambre interne, le piston flottant comprenant un canal pour la communication dudit module de détente avec ladite chambre interne et ledit piston flottant étant maintenu à distance de la ladite fermeture de l'ensemble par l'action de rappel d'un ressort antagoniste. Ainsi, un ensemble amortisseur prévu à l'origine peut effectuer le travail d'un ensemble amortisseur selon l'invention, avec la modification adéquate d'une mise en place d'un piston flottant dans l'ensemble amortisseur et l'aménagement d'un passage de fluide entre l'ensemble amortisseur et le module de détente. La délocalisation du module de détente permet ainsi d'ajuster la valeur de l'amortissement d'une façon optimale, selon le choix de l'homme de l'art et en fonction de la sous-phase en vigueur, ceci pour les quatre sous-phases du fonctionnement de l'ensemble amortisseur. De plus, le module de détente peut ainsi être aisément standardisé et devenir commun pour tous les types de véhicules, à l'exception de certains de ses éléments comme le ressort antagoniste ou la butée de raccordement dont les paramètres comme la raideur, la courbe de la butée et la valeur de l'amortissement sont fonction des caractéristiques du véhicule à équiper. Ceci permet d'abaisser très fortement le coût de la fabrication industrielle d'un tel module de détente.

Dans un exemple ne faisant pas partie de l'invention telle que revendiquée, la communication fluidique permettant l'action du module se fait par l'intermédiaire d'un conduit interne traversant l'ensemble amortisseur par sa fermeture supérieure et faisant communiquer la chambre interne avec le module de détente, lequel conduit interne débouchant par au moins une ouverture entre la tête de piston et le piston flottant, un clapet obstruant ladite ouverture tant que la tête de piston n'est pas en appui contre le piston flottant et, quand la tête de piston est en appui contre le piston flottant, le canal du piston flottant est en vis-à-vis dudit conduit interne, le clapet ayant été poussé en position d'ouverture lors de l'appui de la tête de piston sur le piston flottant.

L'action dudit clapet est très avantageuse et rend possible la fonction de l'amortissement entre la position toute comprimée et la position de repos dans le sens de la détente, le piston flottant étant tenu immobile par l'incompressibilité du fluide. La délocalisation du module de détente relié à l'ensemble amortisseur par une conduite hydraulique permet d'augmenter la standardisation du module de détente et d'offrir de multiples possibilités de positionnement de ce module de détente dans le véhicule.

Dans un exemple ne faisant pas partie de l'invention telle que revendiquée, le conduit interne s'étend à l'intérieur de la tige longitudinalement à ladite tige, le clapet obstruant ladite ouverture étant porté par la tige en faisant saillie latéralement de ladite tige et en pouvant coulisser sur ladite tige, ce clapet étant rappelé par un moyen élastique, par exemple un ressort, dans sa position d'obstruction de ladite ouverture du conduit interne.

Avantageusement, le module de détente présente une entrée d'admission pour le passage du fluide hydraulique expulsé de la chambre interne de l'ensemble amortisseur, l'entrée dudit fluide à l'intérieur du module de détente sollicitant un piston récepteur comprimant par l'intermédiaire d'une butée de raccordement le ressort antagoniste.

Le diamètre du piston peut, selon le choix de l'homme de l'art être plus petit que le diamètre du piston principal de l'amortisseur. Ceci permet un rapport démultiplicateur qui rallonge la course de détente au niveau du module de détente en procurant ainsi une nette amélioration du contrôle de l'amortissement et de la zone correspondant à la flexibilité de raccordement.

Avantageusement, le module de détente comprend une chambre alimentée en fluide, sous régulation d'une électrovalve, cette chambre étant soumise à l'action d'un ressort ou d'une charge de gaz s'opposant à l'entrée dans le module de détente du fluide en provenance de l'ensemble amortisseur.

Ce dispositif peut comprendre un premier piston flottant où prend appui le ressort antagoniste par le biais de la butée de raccordement, un deuxième piston flottant positionné derrière une cloison de séparation qui, elle, est fixe par rapport au module, le deuxième piston flottant subissant une pression constante par un accumulateur qui transmet la pression nécessaire au bon positionnement du piston flottant. Ceci offre la possibilité d'optimisation de l'ensemble amortisseur à la charge réelle du véhicule automobile à un instant donné. Entre les deux pistons flottants, séparés par la cloison fixe, se créent deux chambres pouvant communiquer entre elles par un conduit. Ce conduit est avantageusement contrôlé par une électrovalve. Il est ainsi offert une possibilité de pouvoir connecter l'électrovalve sur le dispositif de la fermeture automatique des portes existant ou encore sur le tachymètre du véhicule. La logique de fonctionnement de ce dispositif est la suivante : véhicule à l'arrêt électrovalve ouverte, véhicule en mouvement, électrovalve fermée.

Avantageusement, le module de détente comprend au moins une chambre alimentée en fluide hydraulique sous régulation d'une électrovalve, cette chambre étant soumise à l'action d'un ressort ou d'une charge de gaz s'opposant à l'entrée dans le module de détente du fluide en provenance de l'ensemble amortisseur.

Dans un exemple ne faisant pas partie de l'invention telle que revendiquée, le piston flottant est en trois parties, le contact de la tête de piston avec le piston flottant en trois parties ouvrant un passage pour le fluide entre deux parties dudit piston flottant, un ressort antagoniste étant prévu de l'autre côté du piston flottant en trois parties que le côté faisant face au piston afin de rappeler le piston flottant en trois parties vers ledit piston.

Avantageusement, il est prévu une sonde de déplacement relevant directement ou indirectement les valeurs de déplacement de la tête de piston, ces valeurs étant transmises à un calculateur gérant l'amortissement en fonction des valeurs conformes aux critères de l'invention qui prévoit un amortissement dans le sens de la détente et un amortissement dans le sens de la compression distinctes pour chacun des secteurs de la course de la suspension allant de la position tout comprimé jusqu'à la position de repos et de la position allant de la position de repos jusqu'à la position tout détendu.

L'ensemble amortisseur est avantageusement un ensemble amortisseur oléopneumatique.

La présente invention concerne aussi un système d'au moins deux tels dispositifs amortisseurs, pour lequel le module de détente est extérieur et commun aux ensembles amortisseurs, le module de détente présentant deux parties indépendantes communiquant chacune avec un ensemble amortisseur respectif.

L'invention concerne aussi un véhicule automobile, caractérisé en ce qu'il comprend au moins un tel dispositif amortisseur ou un tel système d'au moins deux ensembles amortisseurs. L'adoption d'un tel dispositif amortisseur dans un véhicule automobile existant est sensiblement facilitée du fait qu'il est possible de conserver les ensembles amortisseurs prévus avec l'architecture d'origine tout en leur apportant des modifications adéquates, à savoir, la mise en place d'un piston flottant dans l'amortisseur et, pour un module de détente disposé à l'extérieur, une tige d'amortisseur aménagée ou la création d'un canal de communication de l'ensemble amortisseur avec le module de détente.

Avantageusement, le module de détente est associé avec au moins un dispositif de précontrainte commandant le réglage automatique de la précontrainte dudit module de détente selon la charge réelle du véhicule automobile à l'instant donné.

Avantageusement, le dispositif de précontrainte est commandé d'une façon automatique par la fermeture automatique des portes et/ou le tachymètre du véhicule automobile.

L'invention concerne enfin un procédé de suspension d'une roue de véhicule automobile selon la revendication 13. Il comprend la formation d'une phase de compression se composant respectivement d'une sous-phase de compression dirigée de la position statique vers la position maximale de compression du piston et d'une sous-phase de détente dirigée de ladite position maximale vers la position statique, et une phase de détente se composant respectivement d'une sous-phase de détente dirigée de la position statique vers la position maximale de détente du piston et d'une sous-phase de compression dirigée de ladite position maximale vers la position statique, caractérisé en ce que la valeur d'amortissement est choisie différente entre la sous-phase de compression et la sous phase de détente de la phase de compression et/ou entre la sous phase de compression et la sous-phase de détente de la phase de détente.

L'invention utilise un tel ensemble amortisseur, cet ensemble étant actif autour d'une position statique aussi bien dans une phase de compression que dans une phase de détente, la suspension présentant une raideur ou une flexibilité différente entre le secteur de course de la suspension allant de la position statique jusqu'à la position toute comprimée et le secteur de course de la suspension allant de la position statique jusqu'à la position toute détendue, pour lequel procédé il est prévu une étape de modification de la valeur d'amortissement avec des valeurs distinctes pour le sens de la compression comme pour le sens de la détente pour chacun des secteurs de travail de l'amortisseur selon que ce travail s'effectue entre la position statique de la suspension et la position toute comprimée ou entre la position statique de la suspension et la position toute détendue.

Ainsi, la présente invention permet la mise en oeuvre d'un amortissement de la suspension gérant d'une façon adéquate et séparée l'amortissement dans les quatre sous-phases du fonctionnement des suspensions, ceci en permettant de modifier les valeurs de l'amortissement pendant les deux sous-phases de chaque phase au lieu de, comme indiqué dans l'état de la technique, prévoir un compromis imparfait tenant compte seulement de deux phases, c'est à dire une seule valeur en phase de compression et une seule valeur en phase de détente.

Avantageusement, une phase de compression se composant respectivement d'une sous-phase de compression de la position statique à la position maximale de compression du piston et d'une sous-phase de détente de ladite position maximale à la position statique et une phase de détente se composant respectivement d'une sous-phase de détente de la position statique à la position maximale de détente du piston et d'une sous-phase de détente de ladite position maximale vers la position statique, l'étape de modification de la valeur d'amortissement est prévue pendant une ou plusieurs sous-phases parmi une sous-phase de détente en phase détente, une sous-phase de compression en phase de détente et une sous-phase de compression en phase de compression.

Avantageusement, lors d'une même phase de compression ou respectivement de détente, la valeur d'amortissement de l'ensemble amortisseur pour une action de l'ensemble amortisseur entre la position statique et la position maximale de compression ou respectivement la position maximale de compression est différente de la valeur d'amortissement pour l'action inverse.

Avantageusement, il est prévu un réglage de l'ensemble amortisseur selon la charge du véhicule automobile à un instant donné.

Préférentiellement, on peut mettre en oeuvre l'invention avec les options suivantes, utilisables alternativement ou en combinaison :
- l'ensemble amortisseur comporte un piston flottant disposé sur ladite tige entre le piston et une extrémité de l'ensemble, ledit piston flottant étant mobile le long de ladite tige et délimitant une première chambre interne dirigée vers ladite extrémité dans l'ensemble amortisseur, la position du piston flottant influant sur la pression du fluide hydraulique dans ladite chambre interne ;
- l'ensemble amortisseur comprend une séparation étanche disposée entre le piston et le piston flottant et créant une deuxième chambre interne entre le piston flottant et la séparation.
- l'ensemble amortisseur comporte deux chambres, préférentiellement formées d'une troisième et d'une quatrième chambres, respectivement entre le piston et une extrémité de l'ensemble et entre le piston et une paroi de fermeture ;
- le dispositif amortisseur dans lequel la paroi de fermeture est la séparation ;
- le dispositif amortisseur dans lequel les moyens de variation de l'amortissement comportent : un premier circuit de dérivation de fluide entre la troisième chambre et la quatrième chambre, ledit circuit comportant un dispositif à clapet configuré pour autoriser le passage de fluide dans le circuit dans un premier sens de mouvement du piston et pour interdire le passage du fluide dans le circuit dans un deuxième sens de mouvement du piston ; un deuxième circuit de dérivation de fluide entre la troisième chambre et la quatrième chambre, ledit circuit comportant un dispositif à clapet configuré pour autoriser le passage de fluide dans le circuit dans le deuxième sens de mouvement du piston et pour interdire le passage du fluide dans le circuit dans le premier sens de mouvement du piston,
- dispositif amortisseur dans lequel les premier et deuxième circuits de dérivation sont délimités par la paroi externe d'un premier cylindre dont la paroi interne délimite les chambres et par la paroi interne d'un cylindre additionnel.
- dispositif amortisseur dans lequel les premier et deuxième circuits de dérivation de fluide présentent chacun un orifice débouchant respectivement dans les chambres au niveau de la position statique du piston ;
- dispositif amortisseur dans lequel les premier et deuxième circuits de dérivation de fluide présentent chacun un orifice débouchant chacun respectivement dans les chambres à une distance prédéterminée respectivement de l'extrémité de l'ensemble amortisseur et de la paroi de fermeture ;
- dispositif dans lequel le piston comporte deux clapets configurés pour permettre chacun un passage unidirectionnel de fluide au travers du piston, ces passages ayant des directions opposées.

La mise en place de cette stratégie d'amortissement originale par la voie de la mécanique des fluides, peut impliquer l'adaptation de clapeteries d'amortissement aménagées.

En effet, si les 4 valeurs d'amortissement séparées relatives aux 4 semi-phases de travail paraissent possibles à obtenir avec une clapeterie classique, en pratique la liaison hydraulique entre l'amortisseur et le module de détente présenteraient un risque important de cavitation, ce qui dégraderait le fonctionnement de la suspension.

Pour pallier cet inconvénient, de très nombreuses possibilités existent sans sortir du cadre de l'invention.

Un exemple de réalisation d'une clapeterie particulière est présenté ci-après ; cet exemple n'étant pas exhaustif. D'autres clapeteries peuvent être mises en place pour satisfaire aux critères qui caractérisent cette invention.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une coupe longitudinale d'un ensemble amortisseur selon un premier mode de réalisation ne faisant pas partie de la présente invention,
- la figure 2 est une représentation schématique agrandie par rapport à la figure 1 d'une partie de la coupe longitudinale d'un ensemble amortisseur selon la figure 1,
- la figure 3 est une représentation schématique d'une coupe longitudinale d'un module de détente pouvant être disposé à l'extérieur d'un ensemble amortisseur dont la figure 1 représente un des éléments selon le premier mode de réalisation ne faisant pas partie de l'invention,
- la figure 4 est une représentation schématique d'une coupe longitudinale d'une seconde forme de réalisation d'un ensemble amortisseur ne faisant pas partie de la présente invention, qui reprend la solution de la figure 1 en réalisation bitube,
- la figure 5 est une représentation schématique d'une coupe longitudinale d'une troisième forme de réalisation selon l'invention dont le fonctionnement est sensiblement identique à celui des ensembles décrits en figures 1, 2 et 4,
- la figure 6 est une représentation schématique d'une coupe longitudinale d'une quatrième forme de réalisation simplifiée de l'ensemble amortisseur ne faisant pas partie de la présente invention permettant de gérer les quatre sous-phases de l'amortissement selon le concept des quatre phases d'amortissement à valeurs distinctes, mais sans la délocalisation de l'ensemble ressort antagoniste - butée de raccordement,
- la figure 7 est une représentation schématique agrandie et détaillée par rapport à la figure 6 d'une partie de la coupe longitudinale d'un ensemble amortisseur selon la quatrième forme de réalisation simplifiée ne faisant pas partie de la présente invention,
- la figure 8 reprenant la solution de la figure 5 enrichie avec une représentation schématique d'une clapeterie particulière permettant l'optimisation de l'amortissement pour chacune des 4 semi-phases de travail de la suspension,
- la figure 9 présente un mode de réalisation des clapets.

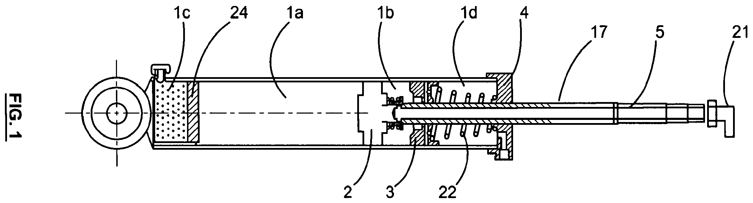

La figure 1 montre un ensemble amortisseur 1 ne faisant pas partie de la présente invention. Cet ensemble amortisseur 1 est illustré sous la forme d'un amortisseur oléopneumatique mais la présente invention n'est pas limitée à un tel amortisseur et peut s'appliquer à tout type d'amortisseur. L'ensemble amortisseur 1 présente un piston 2 mobile à l'intérieur de l'ensemble amortisseur 1 en séparant ledit intérieur en deux chambres 1a et 1b.

Le piston 2 est relié à une tige 17 s'étendant dans la longueur et à l'intérieur de l'ensemble amortisseur 1 et sortant dudit intérieur par une extrémité longitudinale de l'ensemble 1. Cette extrémité longitudinale forme la fermeture supérieure 4 de l'ensemble amortisseur 1. A l'autre extrémité longitudinale de l'ensemble amortisseur 1, il est prévu une entrée de gaz, par exemple de l'azote, afin d'agir sur un plancher mobile qui maintient sous pression l'huile contenue dans l'ensemble amortisseur.

Pour un tel ensemble amortisseur oléopneumatique, afin de garantir la continuité de l'effort du mouvement de l'ensemble piston 2 et tige 17, le piston 2 est immergé dans un fluide hydraulique, l'intérieur de l'ensemble amortisseur 1 renfermant de chaque côté du piston un volume de ce fluide dans une chambre respective 1a ou 1b.

L'admission de gaz sert au remplissage complémentaire d'un espace de confinement 1c situé vers l'extrémité de l'ensemble amortisseur 1 disposée à l'opposé de la fermeture supérieure 4 d'où sort la tige 17. Le gaz est confiné au fond dudit espace de confinement 1c en étant avantageusement séparé du fluide hydraulique par un plancher séparateur flottant 24.

La valeur de l'amortissement sera choisie par l'homme de l'art en fonction de l'objectif visé. De manière avantageuse, l'ensemble amortisseur 1 présente lors de la compression un effet de compression aussi proche que possible de zéro afin de ne pas introduire un freinage inutile et perturbateur pour le confort des occupants du véhicule automobile. En ce qui concerne l'effet de détente, celui-ci sera adapté par l'homme de l'art en fonction de la raideur choisie pour la sustentation du véhicule automobile.

Selon l'état de la technique le plus proche, il est prévu pour un ensemble amortisseur dans son intérieur au moins deux éléments antagonistes montés en opposition l'un par rapport à l'autre. L'action opposée de ces deux éléments antagonistes imprime à l'ensemble des deux amortisseurs d'un même essieu une variation de raideur ou de flexibilité lors du fonctionnement dudit ensemble.

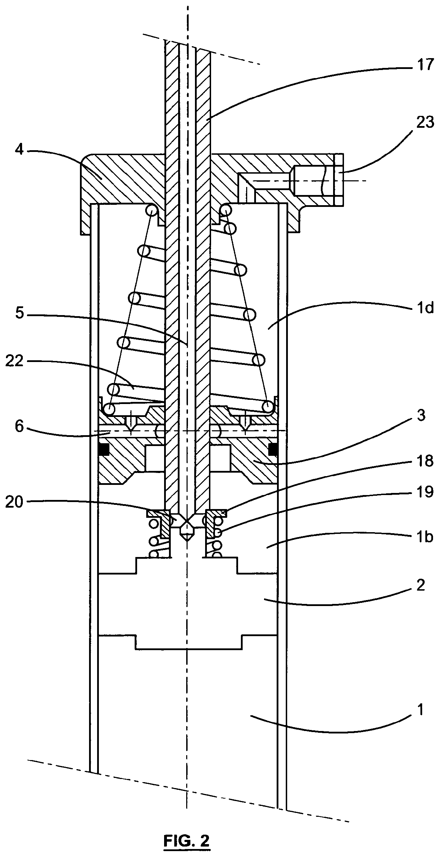

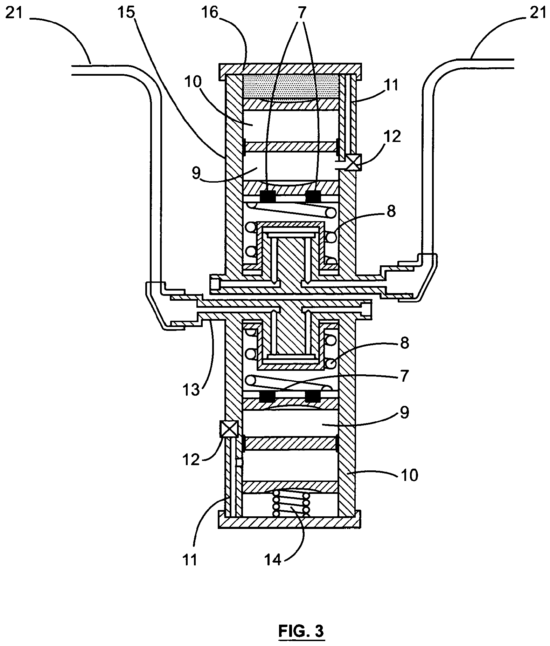

Conformément au premier mode de réalisation ne faisant pas partie de l'invention montré aux figures 1 et 2, il est prévu de délocaliser un des éléments antagonistes à l'extérieur de l'ensemble amortisseur 1 en formant ainsi un module de détente 15 montré à la figure 3.

Conformément à cet exemple, le module de détente 15 agit sur l'ensemble amortisseur 1 afin de modifier, outre la raideur de la suspension, la valeur de l'amortissement mais uniquement dans le secteur de la course allant de la position statique à la position complètement détendue. Pour ce faire, en se référant aux figures 1 et 2, l'ensemble amortisseur 1 comprend un piston flottant 3 positionné à l'intérieur de l'ensemble amortisseur 1 entre le piston 2 et la fermeture supérieure 4 de l'amortisseur 1. Le piston flottant 3 est associé à un système à clapets apte à bloquer ce piston flottant 3 lorsque le piston 2 s'en éloigne dans le sens de la compression dans le secteur allant de la position statique jusqu'à la compression totale de l'ensemble amortisseur 1.

Comme il peut être vu plus particulièrement à la figure 2, le piston flottant 3 est monté libre sur la tige 17 du piston 2, connectée à un conduit de raccordement 21 pour l'acheminement d'un fluide vers un module de détente extérieur à l'ensemble amortisseur 1. Dans la tige 17 du piston 2 de l'amortisseur 1, il est prévu une conduite interne 5 afin de permettre le transfert du volume de fluide déplacé par le piston flottant 3 lorsque le piston 2 de l'ensemble amortisseur 1 se déplace dans la zone de détente, c'est-à-dire de la position statique qui correspond à la position d'équilibre de l'ensemble amortisseur 1 vers la détente maximale de l'ensemble amortisseur 1.

Conformément à cet exemple, le volume de fluide expulsé est transféré, via la conduite hydraulique interne 5, vers le module de détente, référencé 15 à la figure 3. Le module de détente 15 est ainsi délocalisé à l'endroit jugé le plus approprié, module qui sera ultérieurement plus précisément décrit.

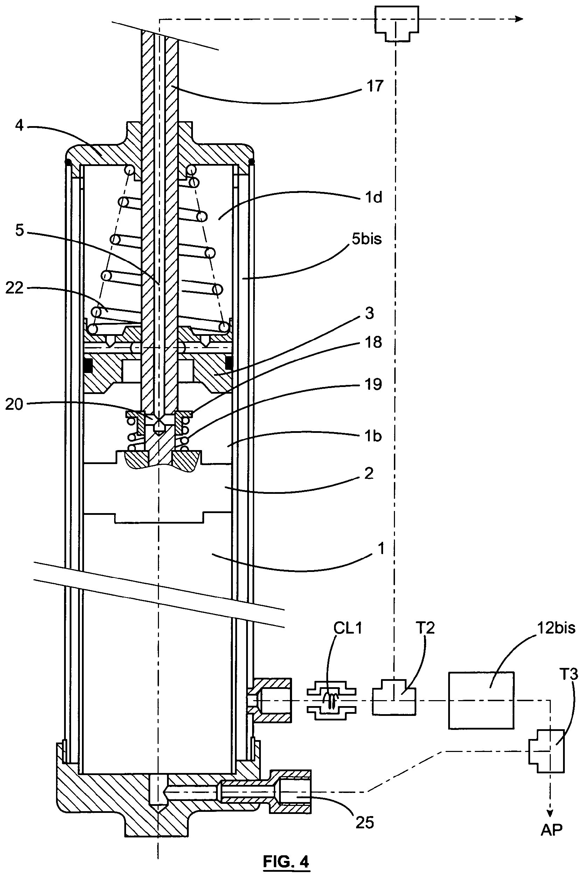

Il est aussi possible de prévoir d'autres façons permettant d'évacuer le volume de fluide de l'ensemble amortisseur 1 vers le module de détente 15 montré à la figure 3. Cela peut être obtenu, par un dispositif fonctionnant selon la technique de l'amortisseur à tubes concentriques de la figure 4. Le système à clapets est alors à adapter selon la technique d'évacuation du volume de fluide de l'intérieur de l'ensemble amortisseur 1.

En se référant notamment à la figure 2, le fonctionnement de l'ensemble amortisseur 1 va maintenant être décrit. Dans le sens de la détente, lors de son déplacement, le piston 2 vient s'appuyer sur le piston flottant 3 qui produit une pression sur le fluide permettant à ce fluide, contenu dans la chambre 1d comprise entre le piston flottant 3 et la fermeture supérieure 4, de s'échapper vers le module de détente à travers le conduit interne 5.

Le système à clapets comprend un premier clapet constitué par une coupelle 18 maintenue en place en étant pressée en direction du piston flottant 3 par un ressort 19, ledit ressort 19 étant disposé entre le piston 2 et la face de la coupelle 18 lui faisant face. Dans cette position, la coupelle 18 obture au moins une ouverture 20 du conduit interne 5 de la tige 17. Ladite ouverture 20 ou avantageusement deux ouvertures, servent à faire communiquer le conduit interne 5 avec l'intérieur de l'ensemble amortisseur 1.

Lorsque le piston 2 atteint la position statique de l'ensemble amortisseur 1, ledit piston 2 entre en contact avec le piston flottant 3. Ce contact entre le piston 2 et piston flottant 3 fait remonter la coupelle 18 contrant l'action du ressort 19 et dégage l'ouverture 20 du conduit interne 5. Ce contact entre le piston 2 et le piston flottant 3 met aussi l'ouverture 20 du conduit interne 5 en vis-à-vis avec un canal 6 disposé à l'intérieur du piston flottant 3. Ceci permet l'alimentation pour le fonctionnement de l'élément antagoniste disposé dans le module de détente.

L'effet d'amortissement apparaissant dans le sens de la détente et étant une cause de dégradation du confort en zone de détente cesse alors avec le contact de la tête de piston 2 avec le piston flottant 3. En effet, toute la colonne de fluide hydraulique, poussée par la pression interne de l'ensemble amortisseur 1, se déplace avec le piston flottant 3 et, privé du laminage du fluide, l'effet d'amortissement cesse.

Un ressort pyramidal 22 est prévu entre le piston flottant 3 et la fermeture supérieure 4 de l'ensemble amortisseur 1, la base la plus large dudit ressort pyramidal 22 étant en appui contre le piston flottant 3 et sa base la plus petite étant en appui contre la fermeture supérieure 4.

Ce ressort pyramidal 22 présente une raideur plus grande que celle du ressort 19 entre le piston 2 et la coupelle 18 afin de garder le conduit interne 5 de la tige 17 de la tête de piston 2 en communication avec le canal 6. En cas de nécessité, il est aussi prévu une purge 23 afin d'évacuer le fluide de la chambre 1d interne de l'ensemble amortisseur 1 se trouvant entre le piston flottant 3 et la fermeture supérieure 4.

Comme il est montré à la figure 3, le module de détente 15, dont la figure 3 montre un montage pour un essieu avec un module pour la roue gauche et un module pour la roue de droite, et qui ne concerne que l'ensemble se rattachant aux figures 1 et 2 comprend en son intérieur un piston récepteur qui, recevant le volume de fluide expulsé de l'ensemble amortisseur 1, comprime par l'intermédiaire d'une butée de raccordement 7 un ressort antagoniste 8. Ceci assure l'accroissement de la raideur recherchée en phase de détente, une des caractéristiques de l'ensemble amortisseur 1 de la présente invention. La butée de raccordement 7 se trouve ainsi isolée thermiquement de l'ensemble amortisseur 1 et pourra fonctionner au sec et sans risque de dégradation.

Comme montré à la figure 3, le fluide hydraulique en provenance de l'ensemble amortisseur pénètre dans le module de détente 15 par l'entrée d'admission 13. Un conduit de raccordement 21 relie le conduit interne 5 de la tige 17 à l'entrée d'admission 13 du module de détente 15. A cette entrée d'admission 13 ou à un autre endroit jugé plus opportun par l'homme de l'art, est positionné un système à clapets adéquat.

Ce système à clapets peut être de type traditionnel, ou, en alternative selon le choix de l'homme de l'art, être un système à clapets qui ne fonctionne qu'en freinant le mouvement dans le sens de la compression pour ralentir la vitesse de décompression du ressort antagoniste 8 du module de détente 15.

En vis-à-vis de son piston récepteur, le module de détente 15 est doté d'une première et d'une seconde chambres 9 et 10 successives et connectées entre elles par le conduit 11 dont l'interconnexion en alimentation en fluide est gérée par une vanne commandée manuellement ou par une électrovalve 12. Cette électrovalve 12 peut être avantageusement commandée selon deux modes afin de mettre en place un automatisme destiné à gérer les variations de charge du véhicule.

C'est la première chambre 9 la plus proche de la butée 7 qui fait office de chambre alimentée en fluide hydraulique sous régulation de l'électrovalve 12, cette chambre 9 étant soumise à l'action d'un ressort 14 ou d'une charge de gaz 16 s'opposant à l'entrée dans le module de détente 15 de fluide en provenance de l'ensemble amortisseur 1.

Dans un premier mode, l'électrovalve 12 peut être connectée sur le dispositif automatique de la fermeture des portes du véhicule, déjà présent sur la plupart des véhicules automobiles ou, en alternative, avec le tachymètre dudit véhicule. De ce fait, aussitôt que le véhicule avec sa charge du moment entre en mouvement avec son assiette définitive, l'électrovalve 12 fige le positionnement optimal du module de détente 15 formant l'ensemble antagoniste de l'ensemble amortisseur 1.

Ce positionnement est obtenu par la poussée du ressort 14 ou par la charge de gaz pressurisé 16, par exemple de l'azote. Ainsi, après chaque arrêt du véhicule, la charge réelle dudit véhicule peut être prise en compte, tout autant que la diminution de carburant issue de la consommation progressive de celui-ci.

Dans un second mode, l'électrovalve 12 est commandée de façon manuelle actionnée selon le souhait du conducteur, avec éventuellement un signal d'alerte afin de faciliter, pour une petite vitesse ne dépassant pas 20 km/heure, les manoeuvres de franchissement, ceci notamment pour les véhicules pouvant faire du hors piste.

Deux modules extérieurs 15, tels qu'ils sont présentés en FIG.3, peuvent être montés en tandem afin d'être liés aux ensembles amortisseurs droit et gauche d'un véhicule automobile, les modules de détente 15 présentant deux parties indépendantes symétriques communiquant chacune avec un ensemble amortisseur respectif.

A la figure 3, le module de détente 15 est montré fonctionnant d'un côté avec une réserve de gaz 16 et de l'autre avec un ressort 14. Il est précisé que ceci n'est qu'illustratif et que le module de détente 15 peut présenter aussi bien un ressort 14 qu'une chambre à gaz 16 pour chacune de ses parties indépendantes reliées respectivement à un ensemble amortisseur.

La figure 4 montre une troisième forme de réalisation de l'ensemble amortisseur ne faisant pas partie de la présente invention. Cette troisième forme de réalisation reprend le fonctionnement général présenté avec les figures 1 et 2, mais avec une variante importante. En effet, le transfert du fluide entre l'ensemble amortisseur 1 et le module de détente 15 se fait toujours via le conduit 17, mais le retour depuis le module de détente 15 du fluide vers la chambre 1d peut se faire autant par le conduit 5 que par le conduit 5bis, via un raccord à 3 voies T1, en traversant un clapet CL1, ceci grâce à la mise en place de la technique bitube.

Par ailleurs, ce clapet CL1 régule le flux entre le module 15 et la chambre 1d, en permettant le passage de ce flux que dans le sens module - chambre 1d, tout en bloquant le passage dans l'autre sens. Le volume de fluide expulsé par l'orifice de communication 25, consécutif à l'introduction de la tige 17 dans l'amortisseur, sera dirigé vers un accumulateur de pression classique AP, via un raccord à 3 voies T3, une électrovalve 12bis, placée entre les raccords à trois voies T2 et T3, permettra de gérer les variations de charge que pourrait avoir à supporter le véhicule.

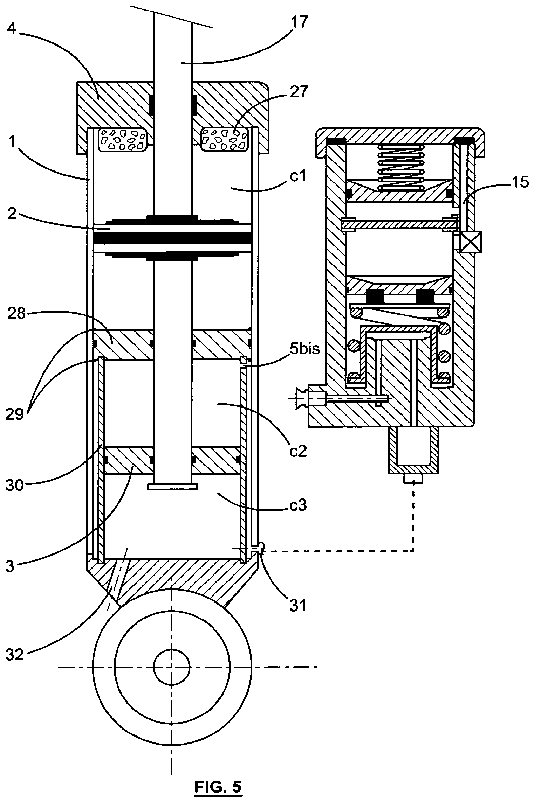

La figure 5 montre une forme de réalisation de la présente invention qui adopte la technique utilisant une tige très spécifique dans l'ensemble amortisseur 1. Cette réalisation prévoit dans un ensemble amortisseur 1, fermé dans sa partie supérieure par une fermeture 4, quatre chambres distinctes c1, c2, c3 et c4, une tige d'amortisseur 17 traversant les quatre chambres. Un piston principal 2, porté par la tige 17, est positionné dans les chambres c1 et c4 et assure l'amortissement dans le sens de la détente comme dans le sens de la compression dans le secteur de la course allant de la suspension toute comprimée jusqu'à la position statique.

Ce même piston 2 assure un effet d'amortissement dans le sens de la détente comme dans le sens de la compression dans le secteur de la course allant de la position statique jusqu'à la position complètement détendue. Le volume de la tige 17 entrant dans la chambre c1 étant complètement compensé par la sortie d'un même volume de cette chambre, une simple butée adéquate en élastomère 27 suffit pour absorber la dilatation issue des changements importants de température de l'amortisseur. Les chambres c2 et c3 sont séparées de la chambre c1 par une séparation 28 fixée dans l'ensemble amortisseur 1 par des clips de fixation 29, les chambres c2 et c3 étant séparées entre elles par un piston flottant 3.

Une architecture 30 du type bitube est mise en place pour les chambres c2 et c3 afin de créer un conduit 5bis débouchant par l'orifice 31 vers un module de détente 15. Entre la position statique et la position toute détendue, le piston flottant 3 sera entraîné par la tige passante 17 et expulsera de la chambre c3 un volume d'huile qui actionnera le module 15 de la même manière qu'il est actionné pour les techniques décrites plus haut et illustrées par les Figures 1 à 4. Une mise à l'air libre 32 complète cet ensemble amortisseur 1.

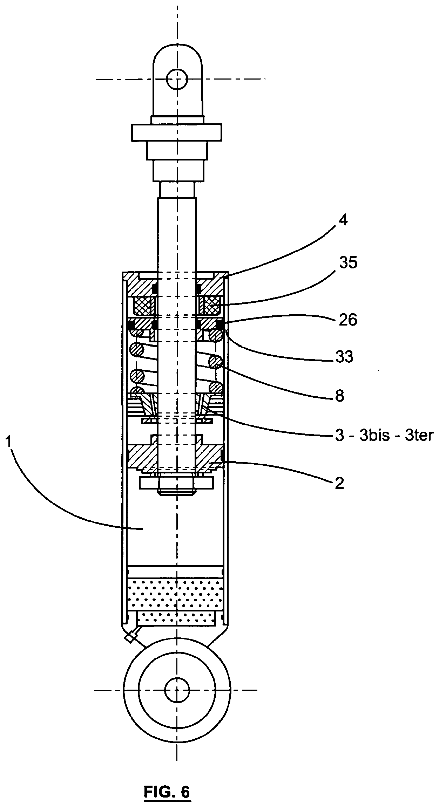

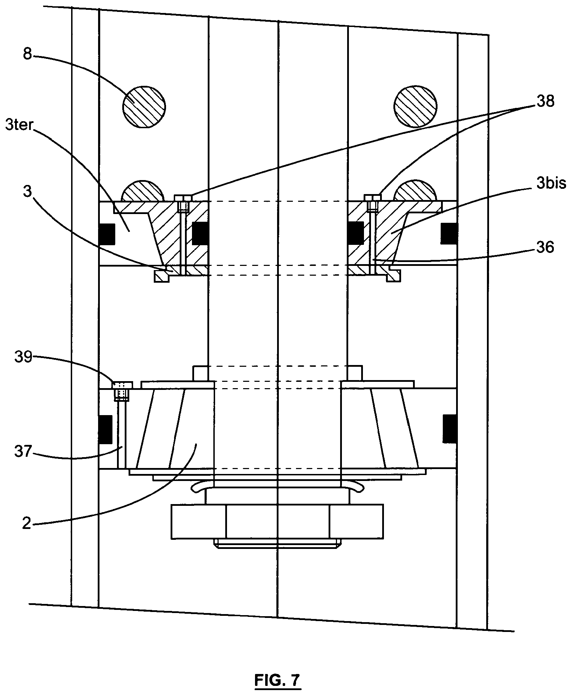

Les figures 6 et 7 montrent une quatrième forme de réalisation de l'ensemble amortisseur ne faisant pas partie de la présente invention. Cette quatrième forme de réalisation, qui dans certains cas peut être particulièrement avantageuse - prévoit de ne pas délocaliser l'ensemble ressort antagoniste 8 - butée de raccordement 35 dans un module distant, mais d'isoler du fluide contenu à l'intérieur de l'ensemble amortisseur 1. La butée de raccordement 35 est présente à la fermeture supérieure 4 de l'ensemble 1. A la figure 6, un premier piston flottant 26 isole la butée de raccordement 35 du fluide de l'ensemble amortisseur 1. De plus, un clip de fixation 33 délimite la course vers le bas du piston flottant 26. L'ensemble ressort antagoniste 8 - butée de raccordement 35, constitutif du concept Contractive®, est positionné dans la partie supérieure de l'ensemble amortisseur 1 entre le piston flottant 26 et un deuxième piston flottant, prévu en trois parties 3, 3bis, 3ter.

Dans cette quatrième forme de réalisation, et très exactement pour ce qui concerne le secteur de la course allant de la position toute détendue à la position statique de la suspension, le piston flottant en trois parties 3, 3bis, 3ter assure l'amortissement de la phase de décompression de l'ensemble ressort antagoniste 8 - butée de raccordement 35. D'autre part, concernant la phase de compression du même ensemble ressort antagoniste 8 - butée de raccordement 35, l'effet amortissement dudit ensemble sera égal à l'effet amortissement qui aura été choisi pour le sens de la détente avec le système à clapets du piston 2, dans le secteur de course allant de la position toute comprimée jusqu'à la position statique.

Enfin, et pour le secteur de course allant de la position toute comprimée jusqu'à la position statique de la suspension, le piston 2 assurera un effet d'amortissement dans le sens de la détente en relation avec la raideur choisie pour la sustentation du véhicule et, dans le sens de la compression, conforme à celui choisi par l'homme de l'art. Cet amortissement est très proche d'un effet amortissement nul ou avec un amortissement modéré.

Comme il sera mieux vu à la figure 7, concernant le piston flottant constitué des parties 3, 3bis et 3ter, les parties 3, et 3bis sont solidarisées par des vis de fixation afin de permettre le montage de l'ensemble. La partie 3, prévue pour limiter la section du passage libre entre 3bis et 3ter, est avantageusement ajourée afin de conserver un passage libre même lorsque les parties 3 et 3ter sont en contact. En se référant à la figure 7, au moins un passage libre 36 de section limitée est prévu dans les parties 3 et 3bis du piston flottant en trois parties 3, 3bis et 3ter même quand les parties 3 et 3bis sont l'une contre l'autre, ceci afin de gérer, en freinant d'une façon adéquate, la décompression de l'ensemble ressort antagoniste 8 - butée de raccordement. Ce passage libre 36 peut être associé à une ou plusieurs lamelles qui pourront obturer le passage 36, en alternative aussi avantageusement calibré par un gicleur 38.

En se référant aux figures 6 et 7, concernant le fonctionnement du piston flottant en trois parties 3, 3bis et 3ter, dans le secteur compris entre la position toute comprimée jusqu'à la position statique, lorsque le piston 2 de l'ensemble amortisseur 1 en remontant vient en contact avec le piston flottant en trois parties 3, 3bis, 3ter, le piston 2 repousse le piston flottant au niveau de 3 et ouvre le passage libre nécessaire entre 3bis et 3ter afin d'assurer la compression de l'ensemble ressort antagoniste 8 - butée de raccordement 35.

En fin de course de compression de l'ensemble ressort antagoniste 8 - butée de raccordement 35 et lorsque le ressort antagoniste 8 commence à se décomprimer, la partie référencée 3bis viendra en contact avec la partie 3ter dudit piston flottant en fermant le passage libre. Le piston flottant 3, 3bis, 3ter, sous l'effet de la pression exercée par le ressort antagoniste 8, redevient étanche et l'amortissement peut être réalisé par le calibrage d'au moins un passage libre 36 ou encore par des lamelles qui viennent obstruer le passage libre 36 en exigeant un effort de freinage correspondant au nombre et à l'épaisseur des lamelles.

Comme visible à la figure 7, dans le piston 2, il est aussi prévu au moins un passage libre 37 pouvant être obturé par un gicleur 39 afin de régler l'amortissement basses vitesses en zone de compression.

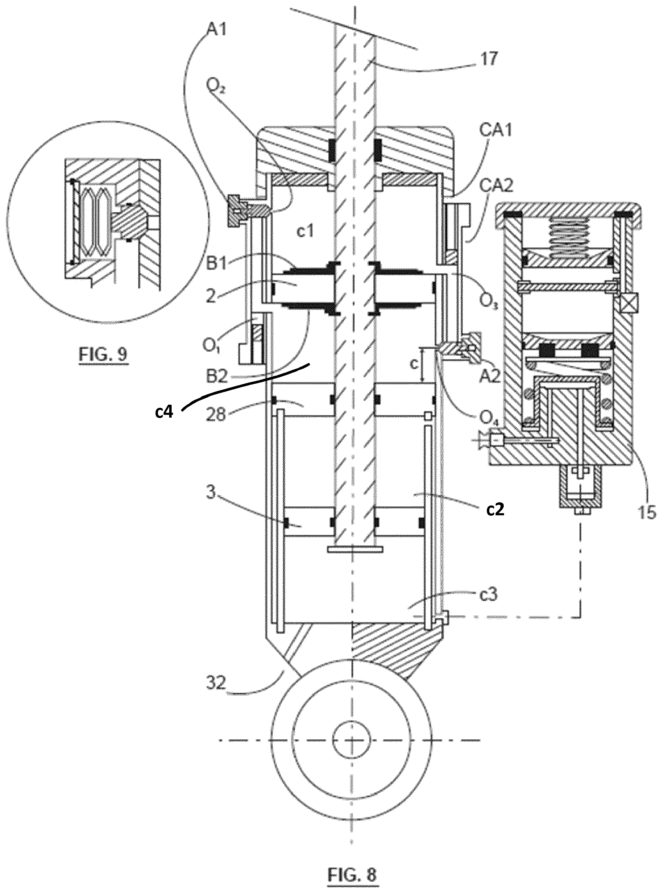

La figure 8 présente schématiquement un montage doté d'une clapeterie particulière permettant de moduler de la façon adéquate la valeur de l'amortissement pour chacune des 4 semi-phases de travail de la suspension.

A cette figure, un système à clapet assure la définition des phases subdivisées chacune en deux sous-phases ou semi-phases. Ce système à clapet est incorporé dans un système amortisseur 1 correspondant sensiblement à celui de la figure 5 et il comprend dans cet exemple avantageusement, mais non limitativement, le module de détente 15 et deux chambres c2, c3 au niveau desquelles un piston 3 est mobile. L'intérêt du système à clapet ici proposé en référence à la figure 8 est qu'il peut se suffire à lui-même pour réaliser les moyens de variations de l'amortissement.

Dans un mode de réalisation, les moyens de variation de l'amortisseur comportent :
- un circuit de dérivation du fluide avec un orifice O₁ débouchant dans une chambre c4 et un orifice O₂ débouchant dans l'autre chambre c1. Ce circuit dispose d'un clapet A1, préférentiellement doté d'un système de retour élastique en position fermée. Avantageusement, la pression exercée en fermeture sur ce clapet A1 est réglable ou ajustable selon la valeur de résistance souhaitée à l'ouverture du clapet A1. Ainsi constitué, ce circuit permet un seul sens de circulation de fluide et ne sera ouvert qu'à la double condition d'un mouvement montant du piston 2 et d'une pression dans la chambre c1 apte à contrer le ressort, le tout dans une position du piston 2 au dessus de l'orifice O₁.
- un circuit de dérivation de fluide avec un orifice O₃ et un orifice O₄ débouchant respectivement dans la chambre c1 et dans la chambre c4. Un clapet A2, par exemple similaire au clapet A1. Comme pour le circuit précédent à clapet A1, le clapet A2 crée un fonctionnement dissymétrique du circuit, avec une fermeture dans le sens montant du piston 2 et une ouverture dans le sens descendant du piston 2, lorsque la pression dans la chambre C4 est supérieure à la résistance à l'ouverture du clapet A2.

On notera que les deux orifices O₁ et O₂ sont positionnés de sorte à définir la position statique du piston 2 telle que représentée. Le piston 2 porte par ailleurs avantageusement des clapets B1 et B2 fournissant deux premières valeurs d'amortissement, l'une en phase de montée du piston, l'autre en phase de descente. Dans le cas illustré, le module de détente 15 et le piston flottant 3 ajoutent leur propre action sur la variante de raideur et d'amortissement.

Les phases d'amortissement et l'intervention de chaque moyen participant à l'amortissement seront détaillées ci-après.

Il est rappelé pour la compréhension, les quatre semi-phases envisagées :
Semi phase 1 : Suspension toute comprimée →Position statique.
Semi phase 2 : Position statique → Suspension toute détendue.
Semi phase 3 : Suspension toute détendue → Position statique.
Semi phase 4 : Position statique → Suspension toute comprimée.

La clapeterie classique pour la phase de détente et pour la phase de compression, dont est doté habituellement le piston d'un amortisseur, est conservée avec les clapets de réglage (B1 & B2) ; le corps de l'amortisseur (CA1) est entouré d'un deuxième corps additionnel (CA2) - façon bitube.

### Semi phase 1 :

Pour assurer la valeur de l'amortissement choisi dans le sens de la détente, entre la position toute comprimée et la position statique de la suspension, c'est le clapet de régulation (B2) qui assurera la valeur adéquate de l'amortissement pour cette demi-phase.

### Semi phase 2 :

Entre la position statique et la position toute détendue, un orifice (O1), situé d'une façon adéquate, juste en dessous du positionnement correspondant à la position statique de la suspension, est créé afin de faire communiquer la chambre (C1) avec la chambre (C4) via l'orifice (O2) débouchant dans la chambre (C1) dont l'entrée est dotée d'un clapet de régulation (A1) permettant un flux de fluide à sens unique, réduisant ainsi la valeur de l'amortissement pour cette demi phase.

Dans la chambre c2, un tampon alvéolé peut tapisser la paroi supérieure de la chambre pour absorber les variations de volume de fluide en fonction des températures.

### Semi phase 3 :

Poursuivant la même logique et pour assurer la valeur de l'amortissement dans le sens de la compression entre la position toute détendue et la position statique, c'est le clapet de régulation (B1) - associé au clapet de régulation du module (CRM) - qui contrôle la vitesse de décompression du ressort antagoniste dans le module - qui contrôlera la valeur globale de l'amortissement.

### Semi phase 4 :

Toujours dans le sens de la compression et poursuivant sa course entre la position statique et le niveau judicieusement choisi par l'homme de l'art pour positionner le clapet de régulation (A2), c'est ce dernier clapet (A2) qui assurera l'optimisation de la valeur de l'amortissement en phase 4. Cependant, pour la course résiduelle qui sera variable selon le choix de l'homme de l'art - voir la cote c correspondant à l'espace créé entre le positionnement du clapet (A2) et allant jusqu'à la fin de la course de compression de la suspension - c'est le clapet de régulation (B1) qui contrôlera la fin de la course de compression d'une façon adéquate et bien plus énergique, avec l'amortissement souhaité.

Cette côte c trouve préférentiellement son correspondant entre l'orifice O₂ et l'extrémité supérieure de l'ensemble amortisseur 1.

La figure 9 montre une possibilité de réalisation pour un ou plusieurs des clapets. Cette solution est facilement industrialisable et évite le recours à des ressorts hélicoïdaux. Le réglage de la raideur en fermeture du clapet est ajusté par des organes élastiques tels des rondelles.

Enfin, il peut être prévu un montage avec un amortissement piloté électroniquement. Ce montage prévoit une sonde de déplacement relevant directement ou indirectement les valeurs de déplacement du piston, ces valeurs étant transmises au calculateur gérant l'amortissement en fonction des valeurs conformes aux critères de l'amortissement qui prévoit un amortissement dans le sens de la détente et un amortissement dans le sens de la compression distinctes pour chacune des sous-phases allant de la position toute comprimée jusqu'à la position de repos et de la position allant de la position de repos jusqu'à la position toute détendue.

Dans cette forme de réalisation, non montré aux figures, il peut être prévu une sonde de déplacement dans l'ensemble amortisseur ou parallèle audit ensemble amortisseur qui indique à un calculateur gérant l'amortissement les valeurs adéquates à adopter pour les quatre zones de travail à considérer.

A titre d'exemple, il est ici présenté un tableau comparatif illustrant les valeurs d'amortissement choisies en fonction de certaines raideurs. Pour cet exemple, ces valeurs sont à considérer pour une vitesse unique de 0,3 mètre/seconde avec des raideurs empruntées à un véhicule de production existant, soit pour un véhicule classique doté d'une raideur de 5 daN/mm en phase de compression et en phase de détente et, pour le même amortisseur en version Contractive®, avec une raideur en phase de détente portée à 15 daN/mm. La comparaison se fait entre un véhicule automobile doté d'ensembles amortisseurs traditionnels, un véhicule doté d'ensembles amortisseurs Contractive® et enfin avec des ensembles amortisseurs selon la présente invention sous la dénomination 4 A.V.S. Les valeurs théoriques idéales pour un amortissement physiquement optimisé sont indiquées entre parenthèses.

| Valeurs d'amortissement à 0.3 M/sec et raideurs pour le véhicule de production considéré | Suspension traditionnelle | Contractive «classique» | Suspension 4 A.V.S. |
|---|---|---|---|
| Secteur de travail détente Valeur d'amortissement dans le sens détente (Semi phase 2) | 178 kg (0 kg) | 178 kg (0 kg) | 0 kg (0 kg) |
| Raideur considérée | 5 daN/mm | 15 daN/mm | 15 daN/mm |
| Secteur de travail détente Valeur d'amortissement dans le sens compression (Semi phase 3) | 80 kg (178 kg) | 80 kg (308 kg) | 308 kg (308 kg) |
| Raideur considérée | 5 daN/mm | 15 daN/mm | 15 daN/mm |
| Secteur de travail compression Valeur d'amortissement dans le sens détente (Semi phase 1) | 178 kg (178 kg) | 178kg (178 kg) | 178 kg (178 kg) |
| Raideur considérée | 5 daN/mm | 5 daN/mm | 5 daN/mm |
| Secteur de travail compression Valeur d'amortissement dans le sens compression (Semi phase 4) | 80 kg (0 kg) | 80 kg (0 kg) | 0 kg (0 kg) |
| Raideur considérée | 5 daN/m | 5 daN/m | 5 daN/m |

L'invention concerne aussi un procédé de suspension de véhicule automobile, ceci étant pris dans le sens large du terme, c'est-à-dire, tout véhicule avec des suspensions se mouvant par ses propres moyens, ce procédé utilisant un tel ensemble amortisseur, cet ensemble étant actif autour d'une position statique aussi bien dans une phase de compression que dans une phase de détente, la suspension présentant une raideur ou une flexibilité différente entre le secteur de course de la suspension allant de la position statique jusqu'à la position toute comprimée et le secteur de course de la suspension allant de la position statique jusqu'à la position toute détendue, pour lequel procédé il est prévu une étape de modification de la valeur d'amortissement avec des valeurs distinctes pour le sens de la compression comme pour le sens de la détente pour chacun des secteurs de travail de l'amortisseur selon que ce travail s'effectue entre la position statique de la suspension et la position toute écrasée ou entre la position statique de la suspension et la position toute détendue, soit la mise à disposition de quatre valeurs d'amortissement distinctes pour quatre phases de travail au lieu de deux valeurs d'amortissement pour quatre phases de travail comme c'est le cas pour les suspensions traditionnelles.

Ceci peut être vu sur le tableau précédemment mentionné. Pour la sous-phase de détente dans le secteur de travail détente, la valeur d'amortissement est diminuée à 0 kg tandis qu'elle était de 178Kg pour une suspension traditionnelle ou une suspension du type Contractive®. De même, pour une sous-phase de compression en secteur de travail détente, la valeur d'amortissement est augmentée à 308 Kg alors qu'elle était de 80Kg pour une suspension traditionnelle ou une suspension du type Contractive®. Enfin, pour une sous-phase de compression en secteur de travail compression, la valeur d'amortissement est diminuée à 0 Kg alors qu'elle était de 80Kg pour une suspension traditionnelle ou une suspension du type Contractive®.

Dans le cas de figure du tableau, trois sous-phases, c'est à dire la sous-phase de détente en secteur de travail détente, la sous-phase de compression en secteur de travail détente et la sous-phase de compression en secteur de travail compression présentent donc des valeurs d'amortissement modifiées.

Ceci n'est cependant pas limitatif et une autre combinaison de sous-phases avec des valeurs modifiées est aussi possible de même que de n'avoir qu'une seule sous-phase avec une valeur d'amortissement modifiée.

Il est aussi possible, lors d'une même phase de compression ou respectivement de détente, d'avoir une valeur d'amortissement de l'ensemble amortisseur pour une action de l'ensemble amortisseur entre la position statique et la position maximale de compression ou respectivement de détente différente de la valeur d'amortissement pour l'action inverse

Ainsi, comme il peut être vu au tableau précédemment mentionné, ceci uniquement dans un but illustratif et non limitatif, la valeur d'amortissement pour la sous-phase de détente dans un secteur de travail détente est modifiée pour être égale à 0kg et est différente de la valeur d'amortissement pour la sous-phase de compression dans un secteur de travail détente qui est modifiée pour être égale à 308kg. De même, la valeur d'amortissement pour la sous-phase de compression dans un secteur de travail compression est modifiée pour être égale à 0kg et est différente de la valeur d'amortissement pour la sous-phase de détente dans une zone de compression qui est égale à 178kg.

Il est possible aussi de procéder à d'autres modifications de la valeur d'amortissement pour au moins une sous-phase d'une zone de compression ou de détente, une ou plusieurs sous-phases pouvant être modifiées.

Avantageusement, il est procédé au réglage de l'ensemble antagoniste ressort antagoniste - butée de raccordement selon la charge du véhicule automobile à un instant donné.

Avantageusement, l'amortissement est piloté électroniquement.

**REFERENCES**

| | | | |
|---|---|---|---|
| 1. | Ensemble amortisseur | 24. | Plancher séparateur flottant |
| 1a. | Chambre | 25. | Orifice de communication |
| 1b. | Chambre | 26. | Piston flottant |
| 1c. | Espace de confinement | 27. | Butée en élastomère |
| 1d. | Chambre | 28. | Séparation |
| 2. | Piston | 29. | Clips |
| 3. | Piston flottant | 30. | Architecture |
| 3bis. | Seconde partie du piston flottant | 31. | Orifice |
| | | 32. | Mise à l'air libre |
| 3ter. | Troisième partie du piston flottant | 33. | Clip de fixation |
| | | | |
| 4. | Fermeture supérieure | 35. | Butée de raccordement |
| 5. | Conduit interne | 36. | Passage libre |
| 5bis. | Conduit solution bitube | 37. | Passage libre |
| 6. | Canal | 38. | Gicleur |
| 7. | Butée de raccordement | 39. | Gicleur |
| 8. | Ressort antagoniste | 40. | Tampon |
| 9. | Première chambre | | |
| 10. | Seconde chambre | CL1. | Clapet |
| 11. | Conduit | c1 à c4 | Chambres |
| 12. | Electrovalve | T1 | Raccord 3 voies |
| 12bis. | Electrovalve | T2 | Raccord 3 voies |
| 13. | Entrée d'admission | T3 | Raccord 3 voies |
| 14. | Ressort | AP | Accumulateur de pression |
| 15. | Module de détente | A1, A2 | Clapet |
| 16. | Gaz sous pression | B1, B2 | Clapet |
| 17. | Tige | CA1 | Corps |
| 18. | Coupelle | CA2 | Corps additionnel |
| 19. | Ressort | O₁, O₂ | Orifice |
| 20. | Ouverture | O₃, O₄ | Orifice |
| 21. | Conduit de raccordement | CRM | Clapet de régulation du |
| 22. | Ressort pyramidal | | module |
| 23. | Purge | | |

## Revendications

1. Dispositif amortisseur associé à une suspension comprenant un ensemble amortisseur (1) présentant en son intérieur un piston (2) relié à une tige (17), le piston (2) et sa tige (17) associée étant mobiles aussi bien en compression qu'en détente autour d'une position statique à l'intérieur de l'ensemble amortisseur (1) afin d'effectuer une action d'amortissement, l'intérieur de l'ensemble amortisseur (1) étant rempli d'un fluide hydraulique, ledit ensemble amortisseur (1) coopérant avec des moyens de variation de l'amortissement de sorte à produire :
- une phase de compression se composant respectivement d'une sous-phase de compression dirigée de la position statique vers la position maximale de compression du piston (2) et d'une sous-phase de détente dirigée de ladite position maximale de compression vers la position statique, et
- une phase de détente se composant respectivement d'une sous-phase de détente dirigée de la position statique vers la position maximale de détente du piston (2) et d'une sous-phase de compression dirigée de ladite position maximale de détente vers la position statique,
les moyens de variation de l'amortissement agissant sur l'ensemble amortisseur (1) afin que la valeur d'amortissement d'au moins l'une parmi la sous-phase de compression de la phase de compression et la sous-phase de détente de la phase de détente soit différente de la valeur d'amortissement de, respectivement, la sous-phase de détente de la phase de compression et la sous-phase de compression de la phase de détente,
**caractérisé en ce que** le dispositif amortisseur comporte en outre un module de détente (15) agissant sur l'ensemble amortisseur (1) afin de modifier tant la valeur de la raideur de la suspension que celle de l'amortissement pour le secteur de course de la suspension allant de la position statique à la position toute détendue correspondant à la phase de détente ;
**en ce que** l'ensemble amortisseur comporte un piston flottant (3) disposé sur ladite tige (17) entre le piston (2) et une première extrémité de l'ensemble (1), ledit piston flottant (3) étant mobile le long de ladite tige (17) et délimitant une première chambre interne (c3) dirigée vers ladite première extrémité dans l'ensemble amortisseur (1), et **en ce que** l'ensemble amortisseur (1) comprend une séparation (28) étanche disposée entre le piston (2) et le piston flottant (3) et créant une deuxième chambre interne (c2) entre le piston flottant (3) et la séparation (28), la position du piston flottant (3) influant sur la pression du fluide hydraulique dans ladite deuxième chambre interne (c2) ; **en ce qu'**une architecture (30) du type bitube est mise en place pour les première et deuxième chambre internes (c2, c3) afin de créer un conduit (5bis) débouchant par un orifice (31) vers le module de détente (15), l'entraînement du piston flottant (3) par la tige passante (17) entre la position statique et la position toute détendue expulsant de la deuxième chambre interne (c2) un volume d'huile actionnant le module de détente (15) ;
et **en ce que** le module de détente (15) présente une entrée d'admission (13) pour le passage du fluide hydraulique expulsé de la deuxième chambre interne (c2) de l'ensemble amortisseur, l'entrée dudit fluide hydraulique à l'intérieur du module de détente (15) sollicitant un piston récepteur comprimant, par l'intermédiaire d'une butée de raccordement (7), un ressort antagoniste (8), la vitesse de décompression du ressort antagoniste (8) étant contrôlée par un clapet de régulation du module de détente (15).

2. Dispositif amortisseur selon la revendication précédente dans lequel les moyens de variation sont configurés pour que, pour chaque phase parmi la phase de détente et la phase de compression, la valeur d'amortissement des sous-phases soient différentes.

3. Dispositif amortisseur selon l'une des revendications précédentes, pour lequel le module de détente (15) comprend une première chambre (9) et une deuxième chambre (10) successives situées en vis-à-vis du piston récepteur et connectées entre elles par un conduit (11) dont l'interconnexion en alimentation en fluide hydraulique est sous régulation d'une électrovalve (12), la première chambre (9) étant la plus proche de la butée (7) et faisant office de chambre alimentée en fluide hydraulique sous régulation de l'électrovalve (12), la première chambre (9) étant soumise à l'action d'un ressort (14) ou d'une charge de gaz (16) s'opposant à l'entrée dans le module de détente (15) du fluide en provenance de l'ensemble amortisseur (1).

4. Dispositif amortisseur selon l'une des revendications précédentes, dans lequel l'ensemble amortisseur (1) comporte une troisième et une quatrième chambres (c1, c4) respectivement entre le piston (2) et une deuxième extrémité de l'ensemble (1) et entre le piston (2) et la séparation (28)

5. Dispositif amortisseur selon la revendication précédente dans lequel les moyens de variation de l'amortissement comportent :
- un premier circuit de dérivation de fluide entre la troisième chambre (c1) et la quatrième chambre (c4), ledit circuit comportant un dispositif à clapet (A1) configuré pour autoriser le passage de fluide dans le circuit dans un premier sens de mouvement du piston (2) et pour interdire le passage du fluide dans le circuit dans un deuxième sens de mouvement du piston (2) ;
- un deuxième circuit de dérivation de fluide entre la troisième chambre (c1) et la quatrième chambre (c4), ledit circuit comportant un dispositif à clapet (A2) configuré pour autoriser le passage de fluide dans le circuit dans le deuxième sens de mouvement du piston (2) et pour interdire le passage du fluide dans le circuit dans le premier sens de mouvement du piston (2).

6. Dispositif amortisseur selon la revendication précédente dans lequel les premier et deuxième circuits de dérivation sont délimités par la paroi externe d'un premier cylindre dont la paroi interne délimite les chambres (c1, c4) et par la paroi interne d'un cylindre additionnel.

7. Dispositif amortisseur selon l'une des deux revendications précédentes dans lequel les premier et deuxième circuits de dérivation de fluide présentent chacun un orifice (O1, O3) débouchant respectivement dans les chambres (c4, c1) au niveau de la position statique du piston (2).

8. Dispositif amortisseur selon l'une des trois revendications précédentes dans lequel les premier et deuxième circuits de dérivation de fluide présentent chacun un orifice (O2, O4) débouchant chacun respectivement dans les chambres (c1, c4) à une distance prédéterminée respectivement de l'extrémité de l'ensemble amortisseur (1) et de la paroi de fermeture.

9. Dispositif selon l'une des quatre revendications précédentes dans lequel le piston (2) comporte deux clapets (B1, B2) configurés pour permettre chacun un passage unidirectionnel de fluide au travers du piston (2), ces passages ayant des directions opposées.

10. Dispositif amortisseur selon l'une quelconque des revendications précédentes, pour lequel comprenant une sonde de déplacement relevant directement ou indirectement les valeurs de déplacement du piston (2), ces valeurs étant transmises à un calculateur gérant l'amortissement en fonction desdites valeurs.

11. Véhicule automobile, **caractérisé en ce qu'**il comprend au moins un dispositif amortisseur selon l'une quelconque des revendications précédentes.

12. Véhicule automobile selon la revendication précédente, dans lequel le module de détente (15) de l'ensemble amortisseur (1) est associé avec au moins un dispositif de précontrainte commandant le réglage automatique de la précontrainte dudit module de détente (15) selon la charge réelle du véhicule automobile à l'instant donné, le dispositif de précontrainte étant commandé d'une façon automatique par la fermeture automatique des portes et/ou le tachymètre du véhicule automobile.

13. Procédé de suspension d'une roue de véhicule automobile utilisant un dispositif amortisseur selon l'une quelconque des revendications 1 à 10, ledit procédé comprenant la formation de :
- une phase de compression se composant respectivement d'une sous-phase de compression dirigée de la position statique vers la position maximale de compression du piston (2) et d'une sous-phase de détente dirigée de ladite position maximale vers la position statique, et
- une phase de détente se composant respectivement d'une sous-phase de détente dirigée de la position statique vers la position maximale de détente du piston (2) et d'une sous-phase de compression dirigée de ladite position maximale vers la position statique,
**caractérisé en ce que** la valeur d'amortissement est choisie différente entre la sous-phase de compression et la sous phase de détente de la phase de compression et/ou entre la sous phase de compression et la sous-phase de détente de la phase de détente.

14. Procédé selon la revendication précédente, l'ensemble dudit dispositif étant actif autour d'une position statique aussi bien dans une phase de compression que dans une phase de détente, la suspension présentant une raideur ou une flexibilité différente entre le secteur de course de la suspension allant de la position statique jusqu'à la position toute comprimée et le secteur de course de la suspension allant de la position statique jusqu'à la position toute détendue, pour lequel procédé il est prévu une étape de modification de la valeur d'amortissement avec des valeurs distinctes pour le sens de la compression comme pour le sens de la détente pour chacun des secteurs de travail de l'amortisseur selon que ce travail s'effectue entre la position statique de la suspension et la position toute comprimée ou entre la position statique de la suspension et la position toute détendue.

15. Procédé selon l'une quelconque des deux revendications précédentes, pour lequel, lors d'une même phase de compression ou respectivement de détente, la valeur d'amortissement de l'ensemble amortisseur (1) pour une action de l'ensemble amortisseur (1) entre la position statique et la position maximale de compression ou respectivement la position maximale de compression est différente de la valeur d'amortissement pour l'action inverse.

16. Procédé selon l'une quelconque des trois revendications précédentes, pour lequel l'amortissement est piloté électroniquement.

17. Procédé selon la revendication précédente en combinaison avec la revendication 14 dans lequel un calculateur reçoit, depuis une sonde de déplacement présente dans l'ensemble amortisseur ou parallèle audit ensemble, des valeurs de déplacement du piston (2), le calculateur étant configuré pour déterminer des valeurs d'amortissement pour chaque sous-phase.

## Patentansprüche

1. Dämpfungsvorrichtung in Verbindung mit einer Federung, welche eine Dämpfungsanordnung (1) umfasst, die in ihrem Inneren einen mit einer Stange (17) verbunden Kolben (2) aufweist, wobei der Kolben (2) und seine dazugehörige Stange (17) sowohl bei der Kompression als auch bei der Expansion um eine statische Position im Innern der Dämpfungsanordnung (1) herum beweglich sind, um einen Dämpfungsvorgang ausführen zu können, wobei das Innere der Dämpfungsanordnung (1) mit einer Hydraulikflüssigkeit gefüllt ist, wobei besagte Dämpfungsanordnung (1) mit Mitteln zum Verändern der Dämpfung zusammenwirkt, sodass folgendes erzeugt wird:
- eine Phase der Kompression bestehend jeweils aus einer Kompressionsteilphase, in welcher der Kolben (2) von der statischen Position zur maximalen Kompressionsposition geführt wird, und einer Expansionsteilphase, in welcher er von der maximalen Kompressionsposition zur statischen Position geführt wird, und
- eine Expansionsphase jeweils bestehend aus einer Expansionsteilphase, in welcher der Kolben (2) von der statischen Position zur maximalen Expansionsposition geführt wird, und einer Kompressionsteilphase, in welcher er von der besagten maximalen Expansionsposition zur statischen Position geführt wird,
wobei die Mittel zum Verändern der Dämpfung auf die Dämpfungsanordnung (1) einwirken, damit der Dämpfungswert von zumindest einer Kompressionsteilphase der Kompressionsphase und einer Expansionsteilphase der Expansionsphase jeweils vom Dämpfungswert der Expansionsteilphase der Kompressionsphase und der Kompressionsteilphase der Expansionsphase abweicht,
**dadurch gekennzeichnet, dass** die Dämpfungsvorrichtung des Weiteren ein Expansionsmodul (15) umfasst, das auf die Dämpfungsanordnung (1) einwirkt, um sowohl den Wert der Steifigkeit der Federung als auch den Wert der Dämpfung im Hubabschnitt zwischen der statischen Position und der vollkommen expandierten Position, welche der Expansionsphase entspricht, zu ändern;
darin, dass die Dämpfungsanordnung einen schwimmenden Kolben (3) umfasst, der auf besagter Stange (17) zwischen dem Kolben (2) und einem ersten Ende der Anordnung (1) angeordnet ist, wobei sich der schwimmende Kolben (3) entlang der Stange (17) bewegen kann und eine erste innere Kammer (c3) abgrenzt, die zum ersten Ende in der Dämpfungsanordnung (1) gerichtet ist, und dadurch, dass die Dämpfungsanordnung (1) zwischen dem Kolben (2) und dem schwimmenden Kolben (3) eine abgedichtete Abtrennung (28) umfasst und eine zweite innere Kammer (c2) zwischen dem schwimmenden Kolben (3) und der Abtrennung (28) bildet, wobei die Position des schwimmenden Kolbens (3) den Druck der Hydraulikflüssigkeit der zweiten inneren Kammer (c2) beeinflusst, und **dadurch gekennzeichnet, dass** ein Doppelrohraufbau (30) für die erste und die zweite innere Kammer (c2, c3) angebracht wird, um eine Leitung (5bis) zu bilden, die durch eine Öffnung (31) in Richtung des Expansionsmoduls (15) führt, wobei durch den von der durchführenden Stange (17) bewirkten Antrieb des schwimmenden Kolbens (3) zwischen der statischen Position und der vollkommen expandierten Position aus der zweiten inneren Kammer (c2) eine Ölmenge ausgestoßen wird, die das Expansionsmodul (15) betätigt; **dadurch gekennzeichnet, dass** das Expansionsmodul (15) eine Eintrittsöffnung für den Einlass (13) und das Durchströmen der von der zweiten inneren Kammer (c2) der Dämpfungsanordnung ausgestoßenen Hydraulikflüssigkeit aufweist, wobei die Eintrittsöffnung der Hydraulikflüssigkeit im Innern des Expansionsmoduls (15) einen Nehmerkolben beansprucht, der über einen Verbindungsstoß (7) eine gegenläufige Feder (8) komprimiert, wobei die Dekompressionsgeschwindigkeit der gegenläufigen Feder (8) durch eine Regelklappe des Expansionsmoduls (15) gesteuert wird.

2. Dämpfungsvorrichtung nach dem vorhergehenden Anspruch, in welcher die Veränderungsmittel so gestaltet sind, dass der Dämpfungswert der Teilphasen jeder Expansions- und Kompressionsphase unterschiedlich hoch ist.

3. Dämpfungsvorrichtung nach einem der vorhergehenden Ansprüche, in dem das Expansionsmodul (15) eine erste Kammer (9) und eine zweite Kammer (10) umfasst, die gegenüber dem Nehmerkolben hintereinander angeordnet und durch eine Leitung (11) miteinander verbunden sind, deren Zwischenanschluss an der Versorgung der Hydraulikflüssigkeit von einem Magnetventil (12) geregelt wird, wobei die erste Kammer (9) dem Verbindungsstoß (7) am nächsten steht und als Kammer dient, die von der Hydraulikflüssigkeit durch Steuerung des Magnetventils (12) versorgt wird, wobei auf die erste Kammer (9) eine Feder (14) oder einer Gasfüllung (16) einwirkt, die der von der Dämpfungsanordnung (1) kommenden Flüssigkeit am Eintritt in das Expansionsmodul (15) entgegenwirkt.

4. Dämpfungsvorrichtung nach einem der vorhergehenden Ansprüche, in welcher die Dämpfungsanordnung (1) eine dritte und eine vierte Kammer (c1, c4) jeweils zwischen dem Kolben (2) und einem zweiten Ende der Dämpfungsanordnung (1) und zwischen dem Kolben (2) und der Abtrennung (28) umfasst.

5. Dämpfungsvorrichtung nach dem vorhergehenden Anspruch, in welcher die Mittel zur Dämpfungsänderung folgendes umfassen:
- einen ersten Nebenstromkreis der Flüssigkeit zwischen der dritten Kammer (c1) und der vierten Kammer (c4), wobei besagter Kreis eine Ventilvorrichtung (A1) umfasst, die so gestaltet ist, dass das Strömen der Flüssigkeit durch den Kreis in einer ersten Bewegungsrichtung des Kolbens (2) möglich ist und das Strömen der Flüssigkeit durch den Kreis in einer zweiten Bewegungsrichtung des Kolbens (2) nicht möglich ist;
- einen zweiten Nebenstromkreis der Flüssigkeit zwischen der dritten Kammer (c1) und der vierten Kammer (c4), wobei besagter Kreis eine Ventilvorrichtung (A2) umfasst, die so gestaltet ist, dass das Strömen der Flüssigkeit durch den Kreis in der zweiten Bewegungsrichtung des Kolbens (2) möglich ist und das Strömen der Flüssigkeit durch den Kreis in der ersten Bewegungsrichtung des Kolbens (2) nicht möglich ist.

6. Dämpfungsvorrichtung nach dem vorhergehenden Anspruch, in welcher der erste und der zweite Nebenstromkreis durch eine Außenwand eines ersten Zylinders, dessen Innenwand die Kammern (c1, c4) abgrenzt, und durch die Innenwand eines zusätzlichen Zylinders begrenzt sind.

7. Dämpfungsvorrichtung nach einem der beiden vorhergehenden Ansprüche, in welcher der erste und der zweite Nebenstromkreis jeweils eine Öffnung (O1, O3) aufweisen, die in der statischen Position des Kolbens (2) jeweils zu den Kammern (c4, c1) führen.

8. Dämpfungsvorrichtung nach einem der drei vorhergehenden Ansprüche, in welcher der erste und der zweite Nebenstromkreis jeweils eine Öffnung (O2, O4) aufweisen, die jeweils in einer jeweils vorab festgelegten Entfernung zum Ende der Dämpfungsanordnung (1) und zur Abschlusswand in die Kammern (c1, c4) führt.

9. Dämpfungsvorrichtung nach einem der vier vorhergehenden Ansprüche, in welcher der Kolben (2) zwei Ventile (B1, B2) umfasst, die so gestaltet sind, dass jeweils das Durchströmen der Flüssigkeit durch den Kolben (2) in einer Richtung möglich ist, wobei die Flüssigkeiten in jeweils entgegengesetzter Richtung hindurch strömen.

10. Dämpfungsvorrichtung nach einem der vorhergehenden Ansprüche, die eine Verschiebungssonde umfasst, die die Verschiebungswerte des Kolbens (2) direkt oder indirekt misst, wobei diese Werte an einen Rechner übertragen werden, der die Dämpfung entsprechend dieser Werte verwaltet.

11. Kraftfahrzeug, **dadurch gekennzeichnet, dass** es zumindest eine Dämpfungsvorrichtung nach einem der vorhergehenden Ansprüche umfasst.

12. Kraftfahrzeug nach dem vorhergehenden Anspruch, in dem das Expansionsmodul (15) der Dämpfungsanordnung (1) mit zumindest einer Vorspannvorrichtung verbunden wird, welche die automatische Einstellung der Vorspannung des besagten Expansionsmoduls (15) gemäß der tatsächlichen Last des Kraftfahrzeugs zu einem gegebenen Zeitpunkt steuert, wobei die Vorspannvorrichtung durch das automatische Schließen der Türen und/oder den Tachometer des Kraftfahrzeugs automatisch gesteuert wird.

13. Verfahren zur Federung eines Kraftfahrzeugrads, in dem eine Dämpfungsvorrichtung nach einem der Ansprüche 1 bis 10 verwendet wird, wobei besagtes Verfahren die Bildung einer:
- Kompressionsphase umfasst, die aus einer Kompressionsteilphase besteht, in welcher der Kolben (2) von der statischen Position zur maximalen Kompressionsposition geführt wird, und einer Expansionsteilphase, in welcher der Kolben von der besagten maximalen Position zur statischen Position geführt wird, und
- einer Expansionsphase, die aus einer Expansionsteilphase besteht, in welcher der Kolben (2) von der statischen Position zur maximalen Expansionsposition geführt wird, und einer Kompressionsteilphase, in welcher der Kolben von der maximalen Position zur statischen Position geführt wird,
**dadurch gekennzeichnet, dass** in der Kompressionsteilphase und der Expansionsteilphase der Kompressionsphase und/oder der Kompressionsteilphase und der Expansionsteilphase der Expansionsphase ein unterschiedlicher Dämpfungswert ausgewählt wird.

14. Verfahren nach dem vorhergehenden Ansprüche, in dem sich die Vorrichtung sowohl in der Kompressions- als auch in der Expansionsphase um eine statische Position herum bewegt, wobei die Federung eine Steifigkeit oder eine Elastizität aufweist, die im Hubabschnitt der Federung zwischen der statischen Position und der oberen komplett komprimierten Position und dem Hubabschnitt der Federung zwischen der statischen Position und der komplett expandierten Position, unterschiedlich ist, wobei für das Verfahren ein Schritt der Änderung des Dämpfungswertes vorgesehen ist, in dem die Werte für die Kompressionsrichtung wie auch für die Expansionsrichtung in jedem Arbeitsabschnitt des Dämpfers unterschiedlich hoch sind, je nachdem, ob die Arbeit zwischen der statischen Position der Federung und der komplett komprimierten Position oder zwischen der statischen Position der Federung und der komplett expandierten Position durchgeführt wird.

15. Verfahren nach einem der beiden vorhergehenden Ansprüche, in dem in ein und derselben Kompressions- bzw. Expansionsphase der Dämpfungswert der Dämpfungsanordnung (1) bei einer Bewegung der Dämpfungsanordnung (1) zwischen der statischen Position und der maximalen Kompressionsposition bzw. der maximalen Kompressionsposition vom Dämpfungswert der umgekehrten Bewegung abweicht.

16. Verfahren nach einem der drei vorhergehenden Ansprüche, in dem die Dämpfung elektronisch gesteuert wird.

17. Verfahren nach dem vorhergehenden Anspruch in Kombination mit Anspruch 14, in dem ein Rechner von einer in der Dämpfungsanordnung oder parallel dazu angeordneten Verschiebungssonde die Verschiebungswerte des Kolbens (2) empfängt, wobei der Rechner so konfiguriert ist, dass er die Dämpfungswerte für jede Teilphase bestimmt.

## Claims

1. Damping device combined with a suspension comprising a damper assembly (1), the interior of which contains a piston (2) connected to a rod (17), wherein the piston (2) and its associated rod (17) are mobile both in compression and expansion around a static position within the damper assembly (1) in order to perform a Damping action, wherein the interior of the damper assembly (1) is filled with a hydraulic fluid, said damper assembly (1) interacting with means of variation of the damping so as to produce:
- a compression phase consisting respectively of a sub-phase of compression directed from the static position towards the maximum compression position of the piston (2) and of a sub-phase of expansion directed from said maximum compression position towards the static position, and
- an expansion phase consisting respectively of a sub-phase of expansion directed from the static position towards the maximum expansion position of the piston (2) and of a sub-phase of compression directed from said maximum expansion position towards the static position,
wherein the means of variation of the damping act on the damper assembly (1) such the damping value of at least one among the sub-phase of compression of the compression phase and the sub-phase of expansion of the expansion phase is different from the damping value of, respectively, the sub-phase of expansion of the compression phase and the sub-phase of compression of the expansion phase, **characterised in that** the Damping device furthermore comprises an expansion module (15) acting on the damper assembly (1) in order to modify both the value of the rigidity of the suspension and that of the damping for the travel sector of the suspension ranging from the fully expanded position corresponding to the expansion phase;
**in that** the damper assembly comprises a floating piston (3) arranged on said rod (17) between the piston (2) and a first end of the assembly (1), wherein said floating piston (3) is mobile along said rod (17) and delimits a first internal chamber (c3) directed towards said first end in the damper assembly (1), and **in that** the damper assembly (1) comprises a sealed separation (28) arranged between the piston (2) and the floating piston (3) creating a second internal chamber (c2) between the floating piston (3) and the separation (28), wherein the position of the floating piston (3) influences the pressure of the hydraulic liquid in said second internal chamber (c2);
**in that** a twin-tube architecture (30) is implemented for the first and second internal chambers (c2, c3) in order to create a duct (5bis) emerging via an orifice (31) towards the expansion module (15), wherein driving of the floating piston (3) by the through-rod (17) between the static position and the fully expanded position expels from the second internal chamber (c2) a volume of oil operating the expansion module (15); and **in that** the expansion module (15) features an inlet port (13) for passage of the hydraulic fluid expelled from the second internal chamber (c2) of the damper assembly, wherein inflow of said hydraulic fluid inside the expansion module (15) activates a receiving piston, compressing via a connecting stop (7), a counteracting spring (8), wherein the expansion rate of the counteracting spring (8) is controlled by a throttle damper controlling the expansion module (15).

2. Damping device according to the preceding claim, wherein the means of variation are configured such that, for each phase among the expansion phase and the compression phase, the damping values of the sub-phases are different.

3. Damping device according to any of the preceding claims, for which the expansion module (15) comprises a first chamber (9) and a second chamber (10) in succession, located opposite the receiving piston and mutually connected to each other by a duct (11), the interconnection for supply with hydraulic fluid is controlled by a solenoid valve (12), wherein the first chamber (9) is closest to the stop (7) and serves as a chamber supplied with hydraulic fluid under control by the solenoid valve (12), wherein the first chamber (9) is subject to the action of a spring (14) or a gas charge (16) preventing entry into the expansion module (15) of the fluid originating from the damper assembly (1) .

4. Damping device according to any of the preceding claims, wherein the damper assembly (1) comprises a third and fourth chamber (c1, c4) respectively between the piston (2) and a second end of the assembly (1) and between the piston (2) and the separation (28).

5. Damping device according to the preceding claim, wherein the means of variation of the damping comprise:
- a first fluid derivation circuit between the third chamber (c1) and the fourth chamber (c4), wherein said circuit comprises a flap device (A1) configured so as to allow passage of fluid through the circuit in a first direction of movement of the piston (2) and to prohibit passage of the fluid through the circuit in a second direction of movement of the piston (2);
- a second fluid derivation circuit between the third chamber (c1) and the fourth chamber (c4), wherein said circuit comprises a flap device (A2) configured so as to allow passage of fluid through the circuit in the second direction of movement of the piston (2) and to prohibit passage of the fluid through the circuit in the first direction of movement of the piston (2).

6. Damping device according to the preceding claim, wherein the first and second derivations circuits are delimited by the outer wall of a first cylinder, the inner wall of which delimits the chambers (c1, c4) and by the inner wall of an additional cylinder.

7. Damping device according to either of the two preceding claims, wherein the first and second fluid derivation circuits each feature an orifice (O1, O3) respectively emerging in the chambers (c4, c1) at the static position of the piston (2).

8. Damping device according to any of the three preceding claims, wherein the first and second fluid derivation circuits each feature an orifice (O2, O4) each respectively emerging in the chambers (c1, c4) at a predetermined distance respectively from the end of the damper assembly (1) and the closure wall.

9. Device according to any of the four preceding claims, wherein the piston (2) comprises two valves (B1, B2) configured such that each allows unidirectional flow of fluid through the piston (2), with these flows being in opposite directions.

10. Damping device according to any one of the preceding claims, comprising a displacement sensor directly or indirectly recording the displacement values of the piston (2), wherein these values are transferred to a calculator managing the damping as a function of said values.

11. Motor vehicle, **characterised in that** it comprises at least one Damping device according to any one of the preceding claims.

12. Motor vehicle according to the preceding claim, wherein the expansion module (15) of the damper assembly (1) is associated with at least one pre-stressing device governing automatic adjustment of the pre-stress of said expansion module (15) depending on the actual load of the motor vehicle at the given moment, wherein the pre-stressing device is governed automatically by automatic closure of the doors and/or the tachometer of the motor vehicle.

13. Suspension method for a motor vehicle wheel using a Damping device according to any one of claims 1 to 10, wherein said method involves formation of:
- a compression phase consisting respectively of a sub-phase of compression directed from the static position towards the maximum compression position of the piston (2) and of a sub-phase of expansion directed from said maximum position towards the static position, and
- an expansion phase consisting respectively of a sub-phase of expansion directed from the static position towards the maximum expansion position of the piston (2) and of a sub-phase of compression directed from said maximum position towards the static position,
**characterised in that** a different damping value is selected between the sub-phase of compression and the sub-phase of expansion of the compression phase and/or between the sub-phase of compression and the sub-phase of expansion of the expansion phase.

14. Method according to the preceding claim, wherein the whole of said device is active around a static position, both in a compression phase and in an expansion phase, with the suspension having a different rigidity or flexibility between the travel sector of the suspension ranging from the static position to the fully compressed position and the travel sector of the suspension ranging from the static position to the fully expanded position, for which method provision is made for a stage of modifying the damping value with separate values both for the compression direction and for the expansion direction for each of the working sectors of the damper depending on whether this work is performed between the static position of the suspension and the fully compressed position or between the static position of the suspension and the fully expanded position.

15. Method according to any one of the two preceding claims, for which, during the same compression or expansion phase respectively, the damping value of the damper assembly (1), for an action of the damper assembly (1) between the static position and the maximum compression position or the maximum compression position respectively is different from the damping value for the opposite action.

16. Method according to any one of preceding three claims, for which the damping is controlled electronically.

17. Method according to the preceding claim in combination with claim 14 in which a calculator receives, from a displacement sensor present in the damper assembly or parallel to said assembly, displacement values of the piston (2), wherein the calculator is configured to determine damping values for each sub-phase.
